(19)

Europäisches
Patentamt
European
Patent Office
Office européen
des brevets

(11) **EP 4 269 110 A1**

(12) **EUROPEAN PATENT APPLICATION**
published in accordance with Art. 153(4) EPC

(43) Date of publication:
**01.11.2023 Bulletin 2023/44**

(21) Application number: **22745556.5**

(22) Date of filing: **07.01.2022**

(51) International Patent Classification (IPC):
**B33Y 50/00** (2015.01)     **B23K 9/032** (2006.01)
**B23K 9/04** (2006.01)      **G06F 30/23** (2020.01)

(52) Cooperative Patent Classification (CPC):
**B23K 9/032; B23K 9/04; B33Y 50/00; G06F 30/23**

(86) International application number:
**PCT/JP2022/000398**

(87) International publication number:
**WO 2022/163329 (04.08.2022 Gazette 2022/31)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **29.01.2021 JP 2021013576**

(71) Applicant: **Kabushiki Kaisha Kobe Seiko Sho
(Kobe Steel, Ltd.)
Kobe-shi, Hyogo 651-8585 (JP)**

(72) Inventor: **HUANG, Shuo
Kobe-shi, Hyogo 651-2271 (JP)**

(74) Representative: **Müller-Boré & Partner
Patentanwälte PartG mbB
Friedenheimer Brücke 21
80639 München (DE)**

(54) **METHOD FOR PREDICTING DEFORMATION OF ADDITIVELY MANUFACTURED OBJECT**

(57)     A deformation prediction method for an additively manufactured object includes steps of dividing a shape of the additively manufactured object into a plurality of blocks, calculating deformation amount and deformation direction of each block before and after forming a weld bead by parallel processing of a plurality of threads based on the inherent strain method, setting at least one block group composed of blocks to be joined together among the plurality of blocks, and calculating deformation of an entirety of the block group by adding the deformation amount of each block composing the block group according to the deformation direction of the block.

FIG. 4

**Description**

TECHNICAL FIELD

The present invention relates to a deformation prediction method for an additively manufactured object.

BACKGROUND ART

In recent years, there is an increasing need for shaping using a 3D printer as means for production, and research and development are proceeding toward practical use of shaping using a metal material. A 3D printer that builds a metal material uses a heat source such as laser beams, electron beams, and arcs to melt a metal powder or a metal wire, and deposits the molten metal to create an additively manufactured object.

In the production of such an additively manufactured object, a technique is known that analyzes thermal deformation that occurs during shaping by computer simulation. A result of the analysis is used to create a deposition plan that efficiently builds a high-quality additively manufactured object.

For example, Patent Literature 1 discloses a technique for analyzing a deformation amount and residual stress after welding for a welded structure having a plurality of welded layers. Patent Literature 2 discloses a technique of creating shaping data in anticipation of deformation from shape data of a structure manufactured by layered shaping. Patent Literature 3 discloses a technique for calculating an inherent strain of a structure that is built by additive manufacturing with a low calculation load. Patent Literature 4 discloses a technique for reducing a calculation time when a computer analyzes residual stress and deformation occurring in an additively manufactured object. Patent Literature 5 discloses a technique for accurately evaluating the amount of thermal deformation of an additively manufactured object in a short period of time.

All of the above-described Patent Literatures 1 to 5 employ an inherent strain method using elastic analysis that can be analyzed in a relatively short time than thermoelastic-plastic analysis.

CITATION LIST

PATENT LITERATURE

    Patent Literature 1: JP2014-115789A
    Patent Literature 2: JP2020-027491A
    Patent Literature 3: JP2018-184623A
    Patent Literature 4: WO2019/049981
    Patent Literature 5: WO2018/123858

SUMMARY OF INVENTION

TECHNICAL PROBLEM

However, it is not possible to predict and correct the thermal deformation of an object to be built that occurs in a additive manufacturing process with high efficiency prior to shaping, using the above-described analysis method. When using elasto-plastic analysis that reproduces actual phenomena such as solidification and cooling, a calculation load is large, and thus it is difficult to perform calculations in a realistic time. Even when the inherent strain method using the elastic analysis described above is adopted, the calculation time may become long when the number of shaping paths is large.

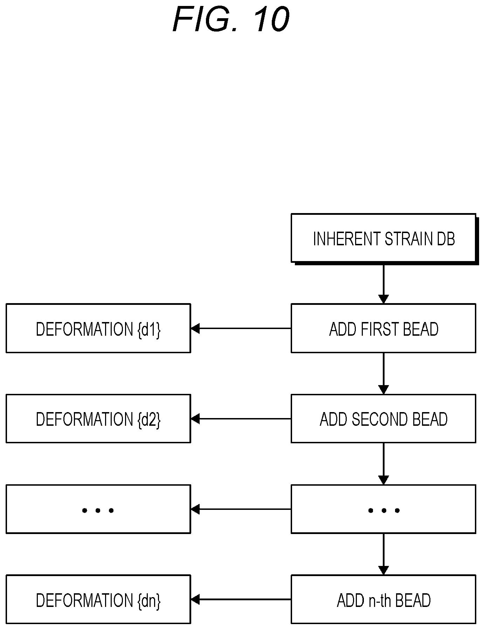

FIG. 10 illustrates a procedure for analyzing thermal deformation of an additively manufactured object using an inherent strain method of the related art. When depositing a plurality of weld beads to build an additively manufactured object, first, an inherent strain of a first bead, which is a first layer, is calculated by referring to a database of inherent strain prepared in advance. Then, deformation {d1} of the first bead is calculated using the calculated inherent strain. Next, deformation {d2} of a second bead is calculated from inherent strain of a second bead calculated from the database and the deformation {d1} of the first bead. As such, a deformation amount of the entire additively manufactured object is calculated by sequentially calculating the deformation {dn} of a n-th bead, which is a final layer.

In the method, deformation of a weld bead of a next layer is sequentially calculated considering deformation of a weld bead of a previous layer. Therefore, it is necessary to proceed calculation of the deformation of the weld beads from a first layer surface to the n-th layer sequentially. Therefore, it is inevitable that the calculation time increases as the number of layers increases.

Accordingly, it is an object of the present invention to provide a deformation prediction method for an additively manufactured object, which enables analysis of deformation occurring during shaping in a short period of time, even when a shape of an additively manufactured object to be produced is complicated. Therefore, it is possible to create a deposition plan that can obtain a highly efficient and high quality additively manufactured object.

SOLUTION TO PROBLEM

The present invention consists of the following configuration.

A deformation prediction method for an additively manufactured object that is built by repeatedly depositing a weld bead layer of a next layer on a weld bead layer formed by a weld bead obtained by melting and solidifying a filler material, the deformation prediction method including the steps of:

dividing a shape of the additively manufactured object into a plurality of blocks;

calculating deformation amount and deformation direction of each block before and after forming the weld bead by parallel processing of a plurality of threads based on the inherent strain method;

setting at least one block group composed of blocks to be joined together among the plurality of blocks; and

calculating deformation of an entirety of the block group by adding the deformation amount of each block composing the block group according to the deformation direction of the block.

ADVANTAGEOUS EFFECTS OF INVENTION

According to the invention, even when a shape of an additively manufactured object to manufacture is complicated, analysis of deformation which occurs at a time of shaping can be performed in a short time.

BRIEF DESCRIPTION OF DRAWINGS

FIG. 1 is a schematic configuration diagram illustrating an additively manufactured object manufacturing apparatus.

FIG. 2 is a hardware configuration diagram of an analysis device that performs deformation prediction.

FIG. 3 is a block diagram illustrating a functional configuration of the analysis device illustrated in FIG. 2.

FIG. 4 is a flowchart illustrating a process of predicting deformation of an additively manufactured object.

FIG. 5 is a flowchart illustrating a procedure for creating an inherent strain database.

FIGS. 6A and 6B are explanatory diagrams schematically illustrating strain when weld beads are deposited.

FIG. 7 is a schematic cross-sectional view of an additively manufactured object built using different types of weld beads.

FIG. 8 is an explanatory diagram illustrating a verification model used for predicting deformation of the additively manufactured object.

FIG. 9 is a graph illustrating calculation times of Test Examples 1-1, 1-2, 1-3, and 1-4, and Test Example 2.

FIG. 10 is an explanatory diagram illustrating a procedure for analyzing thermal deformation of an additively manufactured object using an inherent strain method of the related art.

DESCRIPTION OF EMBODIMENTS

Hereinafter, an embodiment of the present invention will be described in detail with reference to the drawings.

The present invention predicts deformation that occurs in an additively manufactured object when an additively manufactured object is built by repeatedly depositing a next layer of a welded bead layer on a welded bead layer formed by a welded bead obtained by melting and solidifying a filler material.

Additively manufactured object Manufacturing Apparatus

First, a manufacturing procedure of an additively manufactured object will be described.

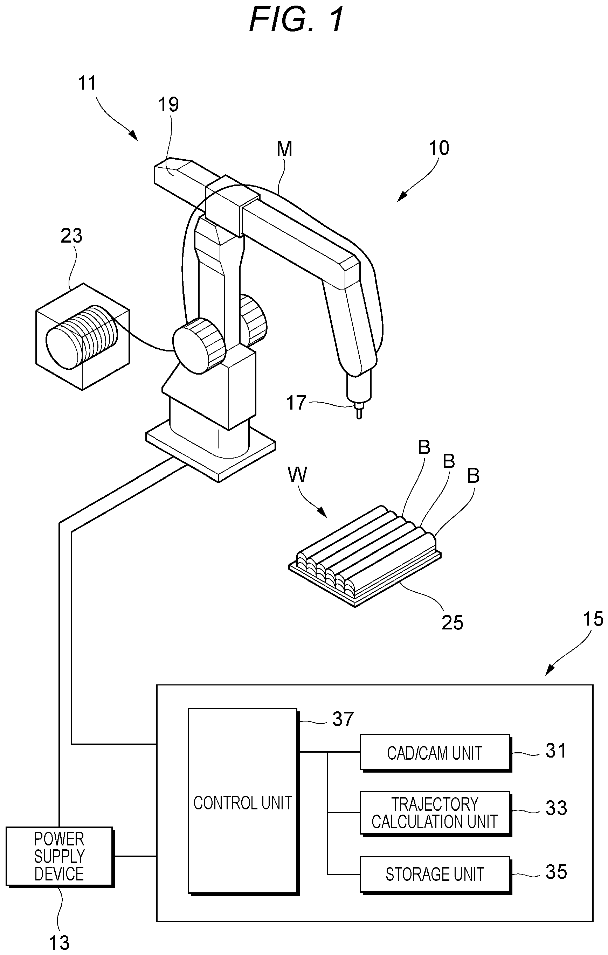

FIG. 1 is a schematic configuration diagram illustrating an additively manufactured object manufacturing apparatus.

There are various manufacturing methods for manufacturing an additively manufactured object, but here, a method of depositing weld beads by arc welding will be described. The additively manufactured object manufacturing apparatus 10 is an apparatus for forming an additively manufactured object or an additively manufactured object as a raw material for obtaining a built product with a desired shape. The additively manufactured object manufacturing apparatus 10 includes an additive manufacturing device 11, a power supply device 13, and a controller 15 that controls the additive manufacturing device 11 and the power supply device 13 in an integrated manner.

The additive manufacturing device 11 includes a welding robot 19 provided with a torch 17 on a tip axis, and a filler material supply unit 23 that supplies a filler material (welding wire) M to the torch 17. The torch 17 holds the filler material M in a state of protruding from a tip.

The welding robot 19 is an articulated robot, and the torch 17 is supported so that the filler material M can be continuously supplied. Position and posture of the torch 17 can be arbitrarily set three-dimensionally within a range of degrees of freedom of a robot arm.

The torch 17 has a shield nozzle (not illustrated), and shielding gas is supplied from the shield nozzle. The arc welding method may be a consumable electrode type such as coated arc welding or carbon dioxide gas arc welding, or a non-consumable electrode type such as TIG welding or plasma arc welding, and is appropriately selected according to an additively manufactured object to be manufactured.

For example, in the case of the consumable electrode type, a contact tip is disposed inside the shield nozzle, and the contact tip holds the filler material M to which melting current is supplied. The torch 17 holds the filler material M and generates an arc from a tip of the filler material M in a shielding gas atmosphere. The filler material M is fed from the filler material supply unit 23 to the torch 17 by a feeding mechanism (not illustrated) attached to the robot arm or the like. When the torch 17 is moved and the continuously fed filler material M is melted and solidified, a linear weld bead B, which is a melted and solidified body of the filler material M, is formed on a base plate 25.

Any commercially available welding wire can be used as the filler material M. For example, a wire specified by a MAG welding and MIG welding solid wire (JIS Z 3312) for mild steel, high-strength steel, and low-temperature steel, and an arc welding flux-cored wire (JIS Z 3313) for mild steel, high-strength steel, and low-temperature steel can be used.

A heat source for melting the filler material M is not limited to the arc described above. For example, a heat source using other methods such as a heating method using both an arc and a laser beam, a heating method using plasma, a heating method using an electron beam or a laser beam, or the like may be employed. When heating with an electron beam or a laser beam, an amount of heating can be more finely controlled, so the state of the weld bead can be maintained more appropriately, and thus a quality of the additively manufactured object can be further improved.

The controller 15 includes a CAD/CAM unit 31, a trajectory calculation unit 33, a storage unit 35, and a control unit 37 to which the units are connected. The controller 15 is configured of a computer device including a CPU, a memory, a storage, and the like.

The CAD/CAM unit 31 reads three-dimensional shape data (CAD data, or the like) of the additively manufactured object to be manufactured, divides a three-dimensional model according to the three-dimensional shape data into a plurality of blocks, and generates block shape data representing a shape of each block. The trajectory calculation unit 33 divides the generated block shape data into weld bead shapes, and determines a movement trajectory of the torch 17 along each divided weld bead shape. Then, according to the block shape data, the welding conditions, and the movement trajectory of the torch 17, a drive program is created to drive each part such as the welding robot 19 of the additive manufacturing device 11, and the power supply device 13.

The storage unit 35 stores various data including information on generated block shape data, welding conditions, movement trajectory of the torch 17, and the like, and drive programs.

The control unit 37 executes the drive program stored in the storage unit 35 to drive each part of the additive manufacturing device 11. That is, the welding robot 19 drives the power supply device 13 according to a command from the control unit 37, moves the torch 17 along a trajectory set in the drive program, and generates an arc at a tip of the torch 17 at a desired timing.

The additively manufactured object manufacturing apparatus 10 having the configuration described above drives each part including the welding robot 19 and the power supply device 13 according to the created drive program, thereby forming a weld bead along the set movement trajectory of the torch 17. That is, the torch 17 is moved and the filler material M is melted, and then the melted filler material M is supplied onto the base plate 25. As a result, a bead layer in which a plurality of linear beads are solidified and arranged on the base plate 25 is formed. By depositing a similar bead layer multiple times on the bead layer, the additively manufactured object W having a multilayer structure as illustrated in FIG. 1 is formed.

The driving program may be generated by another computer device by inputting required information to another computer device other than the controller 15. Here, the generated drive program is input to the storage unit 35 of the controller 15 via appropriate communication means such as LAN.

In a deposition process of the above-described additively manufactured object W, by analytically determining thermal deformation during weld bead formation in advance, it is possible to create a deposition plan that takes the thermal deformation into account, and to achieve higher-precision shaping.

To analyze thermal deformation of the additively manufactured object, a formation procedure of the weld bead is determined based on the shape data of the additively manufactured object and the welding conditions by the additive manufacturing device 11 described above. Then, deformation of each weld bead when deposition manufacturing is performed according to the formation procedure is analytically determined, and a deposition plan that sets various conditions such as weld bead size, bead formation path, welding speed, and welding current is created to obtain a desired target shape, and then the aforementioned drive program is created based on this deposition plan. The created drive program is stored in the storage unit 35 of the controller 15, and the control unit 37 executes the drive program to build an additively manufactured object.

Deformation Prediction Method for Additively manufactured object

Next, a deformation prediction method for a deposited product, which analytically calculates thermal deformation during shaping of the additively manufactured object described above, will be described.

Configuration of Analysis Device

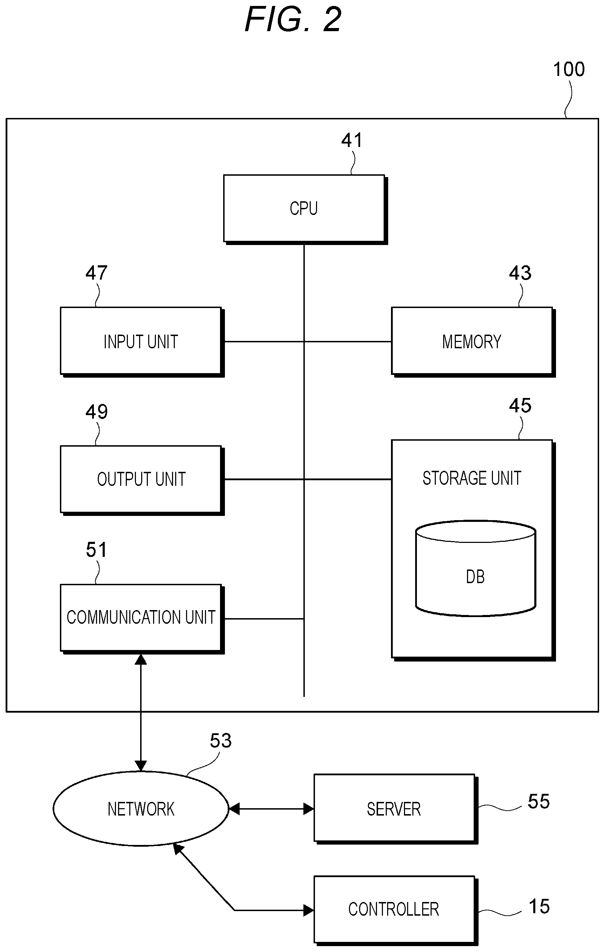

FIG. 2 is a hardware configuration diagram of an analysis device that performs deformation prediction.

An analysis device 100 is a computer device that includes a CPU 41 as a processor, a memory 43 such as random access memory (RAM) and read only memory (ROM), a storage unit 45 such as hard disk drive (HDD) and solid state drive (SSD), an input unit 47, an output unit 49, and a communication unit 51. The analysis device 100 is connected to a network 53 via the communication unit 51 and is capable of transmitting and receiving information from a server 55 or the like connected to the network 53. The controller 15 of the additive manufacturing device 11 may be connected to the network 53 so that information such as a drive program can be input/output to the additive manufacturing device 11.

A multi-core CPU capable of parallel processing is preferably used as the CPU 41, which is a processor. It is more preferable to use a simultaneous multithreading technique that treats one CPU core as a plurality of pseudo cores. Accordingly, processing can be efficiently executed by allocating processing to CPU cores recognized by an operating system (OS) or an application.

The storage unit 45 stores an inherent strain database DB (hereinafter referred to as database DB) required for the analysis described below, and a program that causes the analysis device 100 to function as a device for analyzing deformation.

The database DB has information on various conditions such as welding conditions, material properties of deposited metal, and shape data of additively manufactured objects, and information on inherent strain obtained according to measured deformation values and analysis values.

The input unit 47 may be an input device such as a keyboard and a mouse, or an interface that receives information from the outside.

The output unit 49 may be an output device such as a monitor that displays analysis results by the analysis device 100 on a screen, or an interface that outputs the results to the outside as an output signal.

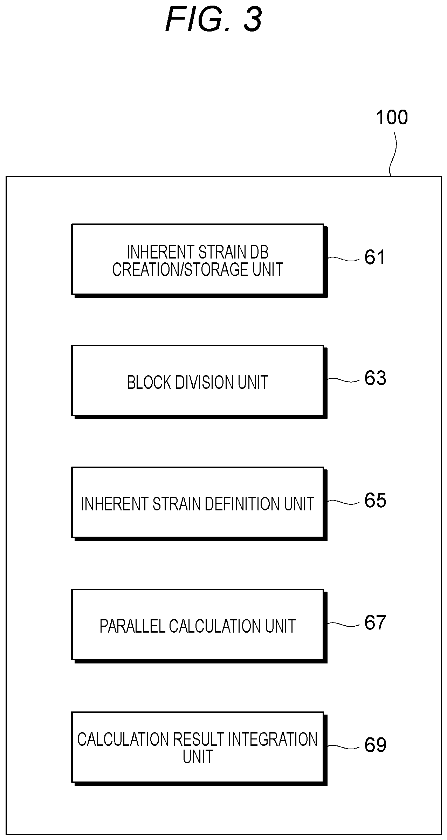

FIG. 3 is a functional block diagram illustrating a functional configuration of the analysis device 100 illustrated in FIG. 2.

The analysis device 100 includes an inherent strain DB creation/storage unit 61, a block division unit 63 for a target shape, an inherent strain definition unit 65 that determines inherent strain for each block, a parallel calculation unit 67, and a calculation result integration unit 69.

The analysis device 100 predicts deformation of an additively manufactured object that is built by repeatedly depositing the next weld bead layer on the weld bead layer formed by the weld beads made by melting and solidifying the filler materials.

Deformation Prediction Procedure

Here, each process of a deformation prediction method for an additively manufactured object is described.

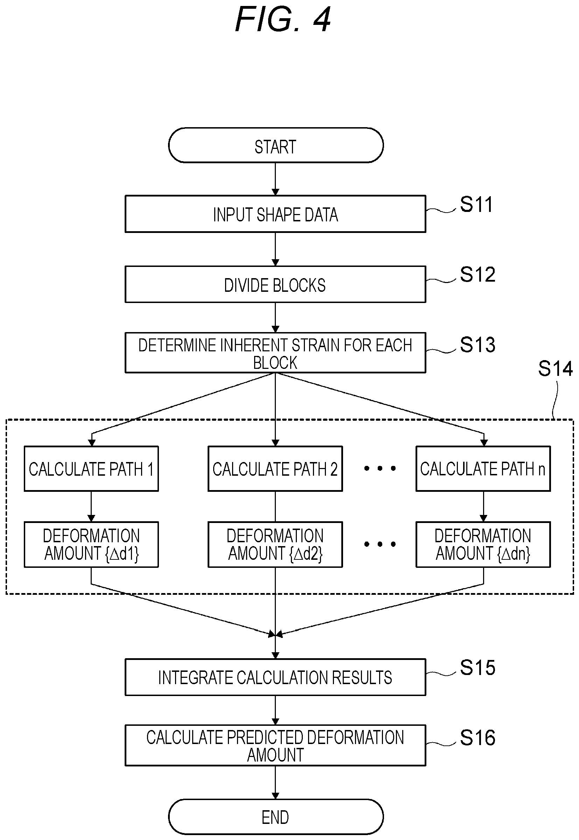

FIG. 4 is a flowchart illustrating a process of predicting deformation of an additively manufactured object. In the following description, the configuration of the analysis device 100 illustrated in FIGS. 2 and 3 will be appropriately referred to.

As illustrated in FIG. 4, first, shape data of the additively manufactured object to be manufactured is input to the storage unit 45 of the analysis device 100 through the input unit 47 or the communication unit 51 (S 11).

The input shape data is sent to the block dividing unit 63, which divides the shape of the additively manufactured object into a plurality of blocks (S12). Here, an example in which the blocks are divided in units of weld bead will be described, but the present invention is not limited thereto.

Next, the inherent strain definition unit 65 determines the inherent strain for each divided block (S 13). The inherent strain of each block is determined by referring to the database DB created by the inherent strain DB creation/storage unit 61.

Inherent Strain Database

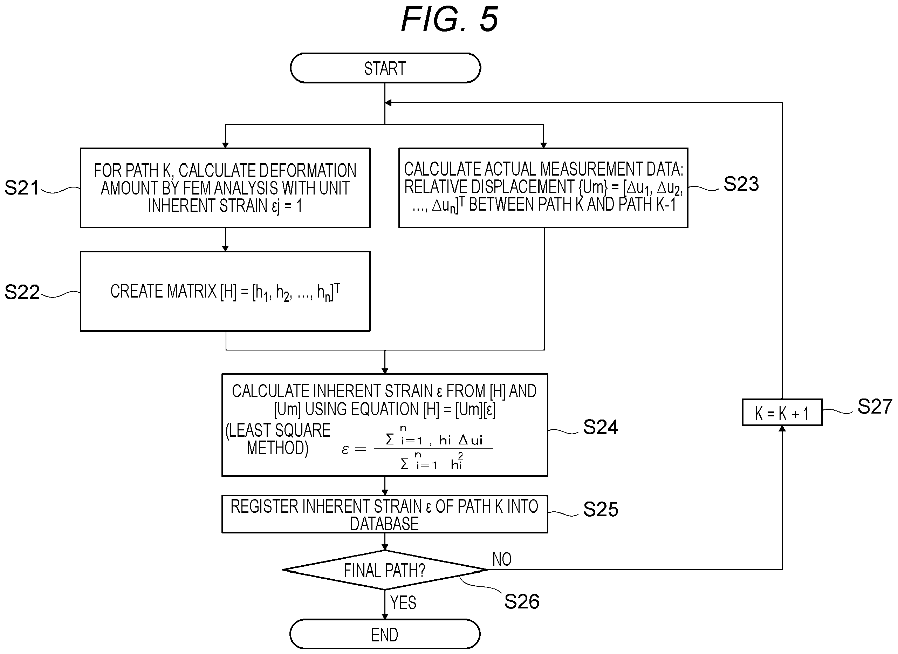

FIG. 5 is a flowchart illustrating a procedure for creating an inherent strain database DB.

Here, the inherent strain is calculated in units of paths (torch trajectories) in which the torch 17 of the additive manufacturing device 11 illustrated in FIG. 1 is moved to form one weld bead.

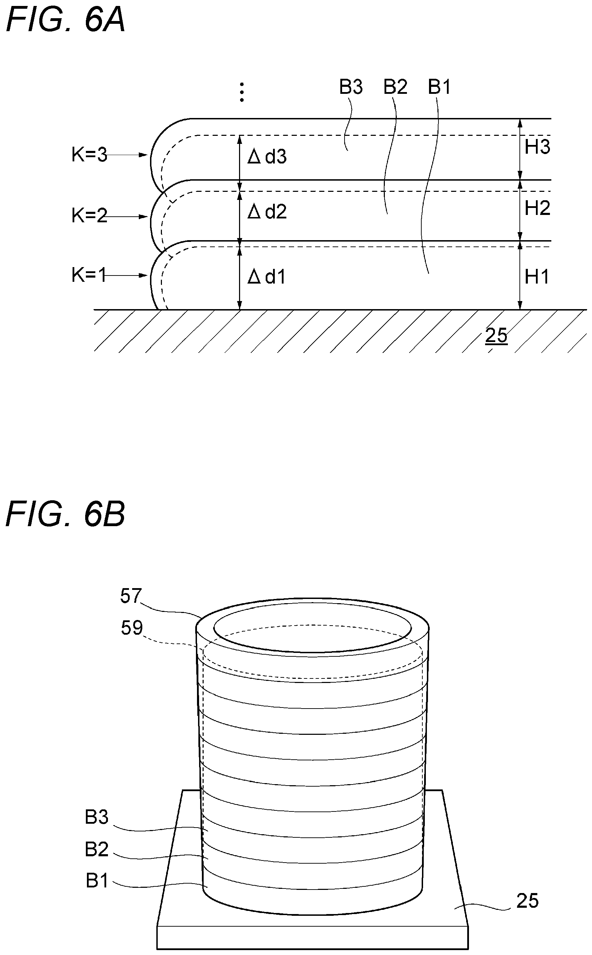

FIGS. 6A and 6B are explanatory diagrams schematically illustrating strain when weld beads B are deposited.

When forming the weld beads B as shown by a planned line indicated by the solid line in FIG. 6A, a weld bead B1 of a first layer (K = 1), a weld bead B2 of a second layer (K = 2), and a weld bead B3 of a third layer (K = 3) respectively change to shapes shown by the dotted line due to thermal contraction after formation.

When the thermal contraction is considered in relation to deformation of the built product, as illustrated in FIG. 6B for a built product having a cylindrical shape, a height of the built product differs between the planned line indicated by the solid line and the actual shape indicated by the dotted line. That is, although the planned shape is the shape indicated by reference numeral 57, the shape of the built product changes to the shape indicated by reference numeral 59 indicated by the dotted line due to thermal contraction. The thermal contraction varies depending on the bead shape of each layer, welding conditions, or the like, and the strain generated in each layer differs.

Therefore, a matrix [H] that relates inherent strain and elastic strain (displacement) is calculated in advance according to various bead shapes, welding conditions, and the like, so that the bead shape can be analytically obtained based on the inherent strain method. A relationship between an inherent strain $\varepsilon_K$, an elastic strain $\varepsilon_j$, and a matrix H is given by Equation (1).
[Equation 1]

$$\left\{\varepsilon_K\right\} = \left[H\right]\left\{\varepsilon_j\right\} \quad \cdots \quad (1)$$

Specifically, as illustrated in FIG. 5, for a path K (initially, the path of a first layer with K = 1), when the weld bead has a unit inherent strain $\varepsilon_j$, a deformation amount to be generated is calculated by, for example, finite element method (FEM) analysis (S21). From the calculated deformation amount and the unit inherent strain $\varepsilon_j$ (= 1), the above-described matrix [H] is created (S22). Here, the matrix [H] is represented by [H] = [$h_1$, $h_2$, ..., $h_n$]$^T$ ((1,2, ..., n) means the path number).

A relative displacement {Um} = [$\Delta u_1$, $\Delta u_2$, ..., $\Delta u_n$]$^T$ between the path K and a path K-1 is calculated by actually depositing and measuring the weld beads (S23).

Using the relative displacement {$U_m$} calculated by actual measurement and the matrix [H] calculated analytically, the inherent strain {$\varepsilon$} is calculated from Equation (2) (S24).
[Equation 2]

$$[H] = \left\{ U_m \right\} \{\varepsilon\} \quad \cdots \quad (2)$$

The inherent strain {$\varepsilon$} can be obtained with high reliability by calculating with the least square method using a plurality of data sets under different conditions. Equation (3) is a basic equation for calculating the inherent strain {$\varepsilon$} by the method of least squares.
[Equation 3]

$$\{\varepsilon\} = \frac{\sum_{i=1}^{n} h_i \Delta u_i}{\sum_{i=1}^{n} h_i^2} \quad \cdots \quad (3)$$

The inherent strain calculated from the above-described basic equation is registered in the database DB in association with the bead shape of the path K, welding conditions, and the like (S25). It is determined whether the path K is a final path (S26), and when there is another path, K is incremented (S27), and the inherent strain for the next path is calculated in the same manner as described above. By repeating the process up to the final path, the inherent strain for each path is registered in the database DB. The database DB is constructed by calculating analysis results and actual measurement results in various different paths and welding conditions in addition to the above-described paths, and accumulating information on the inherent strain in each case.

Returning to FIG. 4, a step of determining the inherent strain for each block (S13) will be described.

The inherent strain definition unit 65 refers to the database DB created by the inherent strain DB creation/storage unit 61 to determine the inherent strain corresponding to each divided block.

Calculation of Deformation by Inherent Strain Method

When the inherent strain is determined for each block, the parallel calculation unit 67 calculates a deformation amount (deformation vector) based on the inherent strain method for each block, that is, for each path (S14). The calculation is performed by parallel processing of multiple threads, that is, simultaneous arithmetic processing of a multi-core CPU.

That is, processing for each layer, processing for calculating a deformation amount {d1} for a path 1 of a first layer, processing for calculating a deformation amount {$\Delta$d2} for a path 2 of a second layer, and processing for calculating a deformation amount {$\Delta$dn} for a path n of an n-th layer, is performed simultaneously. Calculation of the deformation amount in each path is absolute calculation of the deformation amount for the path 1 because a lower layer is the base plate 25, and for the other paths, calculation of the deformation amount is calculation relative to the lower layer. The deformation amount calculated here is a vector amount indicating a direction of deformation and a magnitude of deformation in that direction.

Integration of Deformation of Each Block

Next, the calculation results of the deformation amount in each path calculated by the simultaneous arithmetic processing are integrated (S15). That is, the deformation amount and deformation direction of the entire additively manufactured object are calculated by adding the deformation amount of each path (block) according to the deformation direction of the path. Specifically, the deformation amount {$\Delta$d2}, ..., {$\Delta$dn} in a deposition direction of the other layers is vector-added to the deformation amount {d1} of the path of the first layer. For example, when integrating the deformation amounts of weld beads in the deposition direction, d1 + $\Delta$d2 + $\Delta$d3, which is the deformation amount in the deposition direction, is a height of three layers of beads, as illustrated in FIG. 6A.

Then, the calculated deformation amount is output as the predicted deformation amount of the additively manufactured object (S16). The predicted deformation amount may be output from the output unit 49 illustrated in FIG. 2 to display numerical values on a monitor or the like, or to display the shape together with the state before bead contraction. By transmitting the predicted deformation amount to the server 55 or the controller 15 through the communication unit 51, the server 55 or the controller 15 can correct the shaping plan for manufacturing the additively manufactured object to compensate for the predicted deformation amount. Therefore, it is possible to generate a drive program capable of performing deposit shaping with higher accuracy.

According to the deformation prediction method, since the deformation is predicted using the inherent strain method, calculation of elasto-plastic analysis, which makes the calculation complicated, is not performed, so that a calculation load can be reduced.

Other Division Examples

A process of dividing the shape of the additively manufactured object described above into a plurality of blocks is an example in which a weld bead is divided as a unit and a shape of one block group in which each block is combined becomes the shape of an additively manufactured object, but the process is not limited thereto. For example, a deposit body of a plurality of weld beads may be divided into blocks as a unit. Here, the shape of the additively manufactured object may consist of a plurality of block groups.

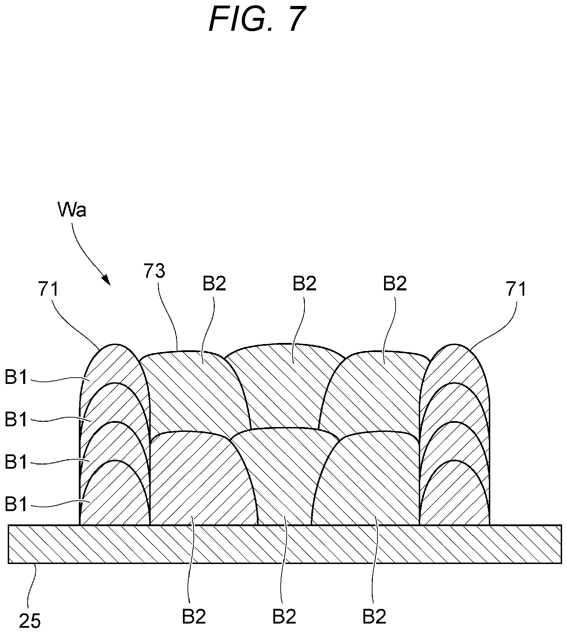

FIG. 7 is a schematic cross-sectional view of an additively manufactured object built using different types of weld beads.

The additively manufactured object Wa includes a frame portion 71 built by depositing weld beads B1 on the base plate 25 and an internal built portion 73 built inside the frame portion 71 by weld beads B2. The internal built portion 73 is configured by depositing weld bead layers made of the weld beads B2.

Such an additively manufactured object Wa is formed, for example, by disposing two different torches for the torch 17 illustrated in FIG. 1 and supplying different types of the filler materials M to respective torches. Specifically, the filler material forming the weld bead B2 is made to contain more sulfur (S) than the filler material forming the weld bead B1. As a result, the weld bead B2 has a wider and flatter cross-sectional shape than the weld bead B1, and has favorable conformability to the base. On the other hand, the weld bead B1, which contains a relatively small amount of sulfur (S), has a high viscosity and surface tension, and has a narrow and raised cross-sectional shape.

Instead of changing the type of the filler material that forms the weld bead, welding conditions such as the welding speed, the welding current, and the welding voltage may be changed, or it is also possible to change both the type of the filler material and the welding conditions. In either case, weld beads having different characteristics are formed.

Thus, when the additively manufactured object has the weld beads B1 and B2 with different characteristics, the frame portion 71 built from the weld beads B1 and the internal built portion 73 built from the weld beads B2 are divided into separate blocks. Then, as described above, the deformation amount and deformation direction of each block before and after weld bead formation are calculated by parallel processing using a plurality of processors based on the inherent strain method for each block.

Accordingly, since the deformation is calculated with the frame portion 71 and the internal built portion 73 as separate blocks, the weld beads having similar characteristics become the same block, and thus the amount of calculation can be further reduced. When leaving the frame portion 71 as it is and forming a weld bead with the internal built portion 73 under different conditions, deformation of the entire additively manufactured object can be easily calculated simply by adding the newly calculated deformation of the internal built portion 73 to the deformation of the block of the frame portion 71 that has already been calculated.

In the above example, blocks are divided according to the difference in weld bead characteristics, but blocks can also be divided according to the shape of the weld bead. For example, a deformation pattern of each block can be simplified by calculating the deformation of a weld bead formed along a straight line and a weld bead formed along a curve as separate blocks. It becomes possible to easily analyze the inherent strain, thereby reducing the computational load for the analysis.

Examples

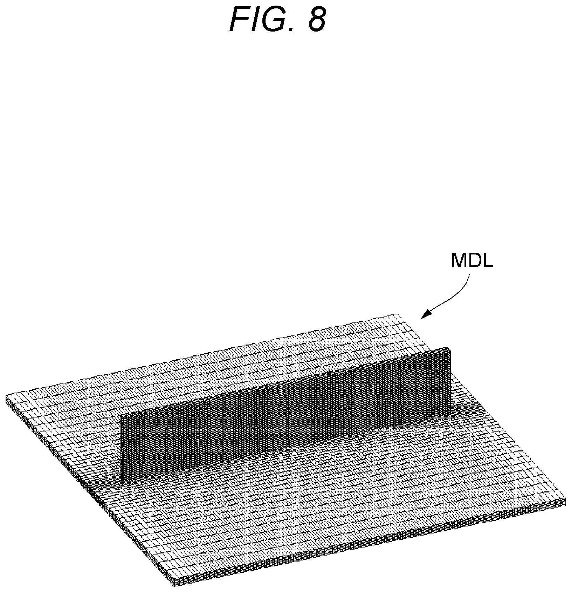

FIG. 8 is an explanatory diagram illustrating a verification model MDL used for predicting deformation of the additively manufactured object.

The deformation of the additively manufactured object was predicted using the verification model MDL illustrated in FIG. 8, and an effect of reducing the calculation time was confirmed.

1. Verification Details

(1) Comparison between program corresponding to present invention and general-purpose software

When a program based on the method for predicting deformation of an additively manufactured object according to the present invention is executed to perform parallel calculation for each block (Test Example 1), Computation times were compared between the case (Test Example 1) of executing parallel calculation for each block by executing a program based on the deformation prediction method for an additively manufactured object according to the present invention and the case (Test Example 2) of executing parallel calculation automatically by the CPU itself using predetermined general-purpose software. However, the CPU configuration of the analysis device used is set such that a CPU using the general-purpose software can perform faster processing than a CPU using a program based on the deformation prediction method for an additively manufactured object according to the present invention.

(2) Presence of parallel calculation

In Test Example 1 described above, the performance of the CPU of the analysis device was set to be the same, and the calculation times were compared between the case (Test Example 1-1) without parallel calculation for each block and the case (Test Examples 1-2, 1-3, 1-4) with parallel calculation for each block.

2. Used Hardware

(1) Specification of analysis device [Configuration 1] that executes program corresponding to present invention

CPU: Intel Core (registered trademark) i7-6800K (6 cores, 12 threads, operating clock 3.4 GHz)
OS: Microsoft Windows 10 (registered trademark)

(2) Specification of analysis device [Configuration 2] that executes general-purpose software

CPU: Intel Xeon (registered trademark) E5-2637v4 (8 cores, 16 threads, operating clock 3.50 GHz)
OS: SUSE Linux (registered trademark) Enterprise Server 11 SP4

3. Calculation Model

3D model of deposited built body, which is wall object composed of 20 layers of weld beads (number of nodes: 79940, number of elements: 63954)

4. Verification Result

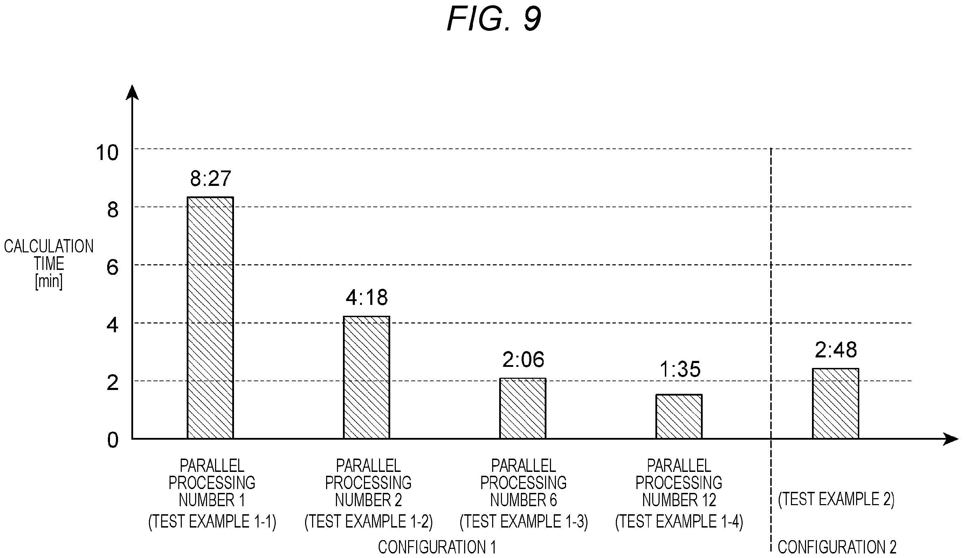

FIG. 9 is a graph illustrating calculation times of Test Examples 1-1, 1-2, 1-3, 1-4, and Test Example 2.
In Test Examples 1-1, 1-2, 1-3, and 1-4, the analysis device of Configuration 1 was used. The calculation time was 8 minutes and 27 seconds when parallel calculation was not performed for each block in Test Example 1-1 (calculated by one thread). The calculation time when the parallel calculation for each block in Test Example 1-2 was performed with two threads was 4 minutes and 18 seconds, the calculation time was 2 minutes and 6 seconds when 6 threads were used in Test Example 1-3, and the calculation time was 1 minute and 35 seconds when 12 threads were used in Test Example 1-4.
On the other hand, in Test Example 2 using the analysis device of Configuration 2, the automatic parallel calculation of the CPU was performed using the predetermined general-purpose software. As a result, the calculation time was 2 minutes and 48 seconds, despite the configuration having higher arithmetic processing performance than the analysis device of Configuration 1.
From the above results, by simultaneously calculating the deformation of a plurality of blocks (weld beads), the calculation time can be shortened as the number of parallel threads increases. Compared to the case (Test Example 2) of automatic parallel calculation of the CPU using the general-purpose software, the calculation time of the parallel calculation with 12 threads in Test Example 1-4 was shorter. This is assumed to be due to the difference in parallel calculation algorithms between the two cases, that is, the general-purpose software computes sequential deformation for each weld bead, while the present method simultaneously computes for a plurality of weld beads.

Thus, the present invention is not limited to the above-described embodiment, and combinations of the configurations of the embodiment with each other, and modifications and applications by those skilled in the art based on the descriptions in the specification and well-known techniques are also contemplated by the present invention and are included in the scope of protection.
As described above, the following matters are disclosed in the specification.

(1) A deformation prediction method for an additively manufactured object that is built by repeatedly depositing a weld bead layer of a next layer on a weld bead layer formed by a weld bead obtained by melting and solidifying a filler material, the deformation prediction method including the steps of:

dividing a shape of the additively manufactured object into a plurality of blocks;
calculating deformation amount and deformation direction of each block before and after forming the weld bead by parallel processing of a plurality of threads based on the inherent strain method;
setting at least one block group composed of blocks to be joined together among the plurality of blocks; and
calculating deformation of an entirety of the block group by adding the deformation amount of each block composing the block group according to the deformation direction of the block.

According to the deformation prediction method for the additively manufactured object, simultaneously calculating the deformation amount and deformation direction for each of the plurality of blocks by parallel calculation enables high-speed arithmetic processing, and thus deformation prediction can be performed in a short time even for a complicated shape of the additively manufactured object. Calculation load can be reduced because the inherent strain method is used without the need for calculation of elasto-plastic analysis, which makes calculations complicated.
(2) The deformation prediction method for the additively manufactured object according to (1), where in the step of dividing into plurality of blocks, the shape of the additively manufactured object is divided by using the weld bead as a unit.
According to the deformation prediction method for the additively manufactured object, since deformation is predicted by dividing blocks for each weld bead, finer deformation can be accurately predicted.
(3) The deformation prediction method for the additively manufactured object according to (1), where in the step of dividing into plurality of blocks, the shape of the additively manufactured object is divided by using a deposit body of a plurality of the weld beads as a unit.

According to the deformation prediction method for the additively manufactured object, each deposit body of the weld beads is divided into blocks to predict deformation. Therefore, for example, in the case of an additively manufactured object in which only specific blocks are replaced, the deformation of the entire additively manufactured object can be easily calculated by adding the deformation of the replaced blocks to the deformation of the other blocks.

(4) The deformation prediction method for the additively manufactured object according to any one of (1) to (3), where

blocks having the same welding condition among the plurality of blocks are set in the same block group.

According to the deformation prediction method for the additively manufactured object, a deformation pattern of each block can be simplified, and thus the analysis of the inherent strain can be simplified.

(5) The deformation prediction method for the additively manufactured object according to any one of (1) to (4), where

when the shape of the additively manufactured object is divided into a plurality of the block groups,

deformation of the additively manufactured object is predicted by adding the deformation amounts of the plurality of block groups according to the deformation directions of the block groups.

According to the deformation prediction method for the additively manufactured object, even when the additively manufactured object has a complicated shape, the deformation is added for each block group, so that complexity of calculation of the deformation of the additively manufactured object can be reduced.

The application is based on a Japanese patent application (Japanese Patent Application No. 2021-13576) filed on January 29, 2021, the content of which is incorporated herein by reference.

REFERENCE SIGNS LIST

10: additively manufactured object manufacturing apparatus
11: additive manufacturing device
13: power supply device
15: controller
17: torch
19: welding robot
23: filler material supply unit
25: base plate

31: CAD/CAM unit
33: trajectory calculation unit
35: storage unit
37: control unit
41: CPU
43: memory
45: storage unit
47: input unit
49: output unit
51: communication unit
53: network
55: server
61: inherent strain DB creation/storage unit
63: block division unit
65: inherent strain definition unit
67: parallel calculation unit
69: calculation result integration unit
71: frame portion
73: internal built portion
100: analysis device
DB: inherent strain database
MDL: verification model
W: additively manufactured object

## Claims

1. A deformation prediction method for an additively manufactured object that is built by repeatedly depositing a weld bead layer of a next layer on a weld bead layer formed by a weld bead obtained by melting and solidifying a filler material, the deformation prediction method comprising the steps of:

dividing a shape of the additively manufactured object into a plurality of blocks;
calculating deformation amount and deformation direction of each block before and after forming the weld bead by parallel processing of a plurality of threads based on the inherent strain method;
setting at least one block group composed of blocks to be joined together among the plurality of blocks; and
calculating deformation of an entirety of the block group by adding the deformation amount of each block composing the block group according to the deformation direction of the block.

2. The deformation prediction method for the additively manufactured object according to claim 1, wherein in the step of dividing into plurality of blocks, the shape of the additively manufactured object is divided by using the weld bead as a unit.

3. The deformation prediction method for the additively manufactured object according to claim 1, wherein in the step of dividing into plurality of blocks, the shape of the additively manufactured object is divided by using a deposit body of a plurality of the weld beads as a unit.

4.  The deformation prediction method for the additively manufactured object according to any one of claims 1 to 3, wherein
    blocks having the same welding condition among the plurality of blocks are set in the same block group.

5.  The deformation prediction method for the additively manufactured object according to any one of claims 1 to 3, wherein

    when the shape of the additively manufactured object is divided into a plurality of the block groups,
    deformation of the additively manufactured object is predicted by adding the deformation amounts of the plurality of block groups according to the deformation directions of the block groups.

6.  The deformation prediction method for the additively manufactured object according to claim 4, wherein

    when the shape of the additively manufactured object is divided into a plurality of the block groups,
    deformation of the additively manufactured object is predicted by adding the deformation amounts of the plurality of block groups according to the deformation directions of the block groups.

# FIG. 1

CAD/CAM UNIT — 31

TRAJECTORY CALCULATION UNIT — 33

STORAGE UNIT — 35

CONTROL UNIT

POWER SUPPLY DEVICE

# FIG. 2

100

41

CPU

47

INPUT UNIT

43

MEMORY

49

OUTPUT UNIT

45

STORAGE UNIT

DB

51

COMMUNICATION UNIT

53

NETWORK

55

SERVER

15

CONTROLLER

# FIG. 3

100

| | |
|---|---|
| INHERENT STRAIN DB CREATION/STORAGE UNIT | 61 |
| BLOCK DIVISION UNIT | 63 |
| INHERENT STRAIN DEFINITION UNIT | 65 |
| PARALLEL CALCULATION UNIT | 67 |
| CALCULATION RESULT INTEGRATION UNIT | 69 |

# FIG. 4

```
           ┌─────────────────┐
           │      START      │
           └────────┬────────┘
                    │
      ┌─────────────▼─────────────┐
      │     INPUT SHAPE DATA       │──── S11
      └─────────────┬─────────────┘
                    │
      ┌─────────────▼─────────────┐
      │       DIVIDE BLOCKS        │──── S12
      └─────────────┬─────────────┘
                    │
      ┌─────────────▼─────────────┐
      │ DETERMINE INHERENT STRAIN  │──── S13
      │     FOR EACH BLOCK         │
      └─────────────┬─────────────┘                        S14
```

CALCULATE PATH 1      CALCULATE PATH 2   · · ·   CALCULATE PATH n

DEFORMATION AMOUNT $\{\Delta d1\}$      DEFORMATION AMOUNT $\{\Delta d2\}$   · · ·   DEFORMATION AMOUNT $\{\Delta dn\}$

```
      ┌───────────────────────────┐
      │ INTEGRATE CALCULATION RESULTS │──── S15
      └─────────────┬─────────────┘
                    │
      ┌─────────────▼─────────────┐
      │ CALCULATE PREDICTED        │──── S16
      │ DEFORMATION AMOUNT         │
      └─────────────┬─────────────┘
                    │
           ┌────────▼────────┐
           │       END       │
           └─────────────────┘
```

## FIG. 5

START

S21 — FOR PATH K, CALCULATE DEFORMATION AMOUNT BY FEM ANALYSIS WITH UNIT INHERENT STRAIN $\varepsilon j = 1$

S23 — CALCULATE ACTUAL MEASUREMENT DATA: RELATIVE DISPLACEMENT $\{Um\} = [\Delta u_1, \Delta u_2, ..., \Delta u_n]^T$ BETWEEN PATH K AND PATH K-1

S22 — CREATE MATRIX $[H] = [h_1, h_2, ..., h_n]^T$

S24 — CALCULATE INHERENT STRAIN $\varepsilon$ FROM [H] AND [Um] USING EQUATION $[H] = [Um][\varepsilon]$ (LEAST SQUARE METHOD) $\varepsilon = \dfrac{\sum_{i=1}^{n} h_i \, \Delta u_i}{\sum_{i=1}^{n} h_i^2}$

S25 — REGISTER INHERENT STRAIN $\varepsilon$ OF PATH K INTO DATABASE

S26 — FINAL PATH?

NO — S27 — $K = K + 1$

YES

END

EP 4 269 110 A1

## FIG. 6A

## FIG. 6B

# FIG. 7

# FIG. 8

MDL

EP 4 269 110 A1

# FIG. 9

CALCULATION
TIME
[min]

8:27

4:18

2:06

1:35

2:48

PARALLEL
PROCESSING
NUMBER 1
(TEST EXAMPLE 1-1)

PARALLEL
PROCESSING
NUMBER 2
(TEST EXAMPLE 1-2)

PARALLEL
PROCESSING
NUMBER 6
(TEST EXAMPLE 1-3)

PARALLEL
PROCESSING
NUMBER 12
(TEST EXAMPLE 1-4)

(TEST EXAMPLE 2)

CONFIGURATION 1

CONFIGURATION 2

# FIG. 10

| INHERENT STRAIN DB |
| --- |

| DEFORMATION {d1} | ← | ADD FIRST BEAD |
| --- | --- | --- |

| DEFORMATION {d2} | ← | ADD SECOND BEAD |
| --- | --- | --- |

| . . . | ← | . . . |
| --- | --- | --- |

| DEFORMATION {dn} | ← | ADD n-th BEAD |
| --- | --- | --- |

## INTERNATIONAL SEARCH REPORT

| International application No. |
|---|
| **PCT/JP2022/000398** |

| A. | CLASSIFICATION OF SUBJECT MATTER |
|---|---|

*B33Y 50/00*(2015.01)i; *B23K 9/032*(2006.01)i; *B23K 9/04*(2006.01)i; *G06F 30/23*(2020.01)i
FI: B23K9/04 A; G06F30/23; B33Y50/00; B23K9/032 Z

According to International Patent Classification (IPC) or to both national classification and IPC

| B. | FIELDS SEARCHED |
|---|---|

Minimum documentation searched (classification system followed by classification symbols)

B33Y50/00; B23K9/032; B23K9/04; G06F30/23

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| A | JP 2017-161981 A (TOSHIBA CORP.) 14 September 2017 (2017-09-14)<br>entire text, all drawings | 1-6 |
| A | JP 2020-1059 A (KOBE STEEL LTD.) 09 January 2020 (2020-01-09)<br>entire text, all drawings | 1-6 |
| A | JP 2021-3724 A (KOBE STEEL LTD.) 14 January 2021 (2021-01-14)<br>entire text, all drawings | 1-6 |
| A | WO 2018/123858 A1 (MITSUBISHI HEAVY INDUSTRIES, LTD.) 05 July 2018 (2018-07-05)<br>entire text, all drawings | 1-6 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **28 February 2022** | **08 March 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**
Information on patent family members

International application No.

**PCT/JP2022/000398**

| Patent document cited in search report | | | Publication date (day/month/year) | Patent family member(s) | | | Publication date (day/month/year) |
|---|---|---|---|---|---|---|---|
| JP | 2017-161981 | A | 14 September 2017 | (Family: none) | | | |
| JP | 2020-1059 | A | 09 January 2020 | EP | 3815826 | A1 | |
| | | | | entire text, all drawings | | | |
| | | | | WO | 2020/003899 | A1 | |
| | | | | CN | 112368099 | A | |
| | | | | US | 2021/0229182 | A1 | |
| JP | 2021-3724 | A | 14 January 2021 | WO | 2020/262291 | A1 | |
| | | | | CN | 114007794 | A | |
| WO | 2018/123858 | A1 | 05 July 2018 | US | 2019/0143607 | A1 | |
| | | | | entire text, all drawings | | | |
| | | | | CN | 109414884 | A | |

Form PCT/ISA/210 (patent family annex) (January 2015)

**REFERENCES CITED IN THE DESCRIPTION**

**Patent documents cited in the description**

- JP 2014115789 A
- JP 2020027491 A
- JP 2018184623 A
- WO 2019049981 A
- WO 2018123858 A
- JP 2021013576 A